# EUROPÄISCHE PATENTSCHRIFT

(11) **EP 0 566 859 B1**
(45) Veröffentlichungstag und Bekanntmachung des Hinweises auf die Patenterteilung: **17.07.1996**
(21) Anmeldenummer: 93104103.2
(22) Anmeldetag: 13.03.1993
(51) Int. Cl.: G01F 1/66

(54) **Ultraschall-Durchflussmesser mit schneckenförmigem Messkanal**
Ultrasonic flowmeter with helical measuring channel
Débitmètre ultrasonique avec canal de mesure hélicoidal

(30) Priorität: 22.04.1992 DE 4213170
(43) Veröffentlichungstag der Anmeldung: 27.10.1993
(73) Patentinhaber: Hydrometer Gesellschaft mbH, D-91522 Ansbach (DE)
(72) Erfinder: Ziegler, Horst, Prof. Dr., D-4790 Paderborn (DE)
(74) Vertreter: Matschkur, Götz, Lindner Patent- und Rechtsanwälte

(56) Entgegenhaltungen:
- EP-A- 0 221 267
- DE-A- 2 833 793
- DE-B- 1 228 835
- DE-B- 2 924 561
- FR-A- 2 211 644

## Beschreibung

Die Erfindung bezieht sich auf einen Ultraschall-Durchflußmesser für fluide Medien mit einer Ultraschallmeßstrecke in einem vom fluiden Medium durchströmten Meßkanal und als Sender und/oder Empfänger fungierenden Ultraschallwandlern, sowie einer Auswerteelektronik zur Ermittlung des Durchflusses des fluiden Mediums aufgrund der Laufzeit oder Phasendifferenz eines Ultraschallsignals, wobei der Meßkanal schnecken- oder wendelförmig aufgewickelt ist.

Ein derartiger Ultraschall-Durchflußmesser weist neben den bislang meist üblichen geraden Meßkanälen den Vorteil auf, daß eine größere Länge der Meßstrecke möglich ist, ohne daß sich dadurch die Länge der Vorrichtung entsprechend erhöht. Mit einer verlängerten Meßstrecke ergibt sich aber auch eine erhöhte Meßgenauigkeit. Es hat sich nunmehr gezeigt, daß bei derartigen aufgewickelten Meßkanälen es schwierig ist, reproduzierhare Ergebnisse mit ausreichender Genauigkeit zu erzielen, die offensichtlich mit der Ausbreitung der Wellen in den gewickelten Meßkanälen verbunden sind.

Der Erfindung liegt daher die Aufgabe zugrunde, einen Ultraschall-Durchflußmesser der eingangs genannten Art so auszugestalten, daß eine verbesserte Meßgenaugikeit selbst bei reduzierten Anforderungen an die Auswerteelektronik möglich ist.

Zur Lösung dieser Aufgabe ist erfindungsgemäß vorgesehen, daß die Frequenz der Ultraschallwandler derart abgestimmt auf den engen Meßkanal gewählt ist, daß dieser wie ein Wellenleiter nur die Fortpflanzung einer longitudinalen Welle mit einer einzigen Quermode über den Querschnitt zuläßt.

Umfangreiche der vorliegenden Erfindung zugrundeliegende Untersuchungen haben ergeben, daß durch diese Ausbildung und die Sicherstellung, daß nur eine bestimmte Wellenform im Meßkanal sich ausbreitet, reproduzierbare genaue Meßergebnisse erreicht werden können, so daß in Verbindung mit den verlängerten Meßstrecken selbst bei nicht zu aufwendig ausgelegten Auswerteelektroniken bereits hervorragende Meßgenauigkeiten sich ergeben.

Schließlich liegt es auch noch im Rahmen der Erfindung, daß bei einem Meßkanal mit kreisrundem Querschnitt mit einem Radius R die Frequenz f <1.84 · C/R gewählt ist, wobei C die Schallgeschwindigkeit ist.

Die Erfindung soll nachstehend anhand einiger Ausführungsbeispiele sowie anhand der Zeichnung näher erläutert werden. Dabei zeigen:
- Fig. 1: eine Aufsicht auf einen torusförmigen Meßkanal,
- Fig. 2: eine Seitenansicht des Meßkanals gemäß Fig. 1,
- Fig. 3: eine Aufsicht auf einen Meßkanal in Form einer 1 1/2-fachen Wendelwicklung, und
- Fig. 4: eine Seitenansicht des Meßkanals nach Fig. 3.

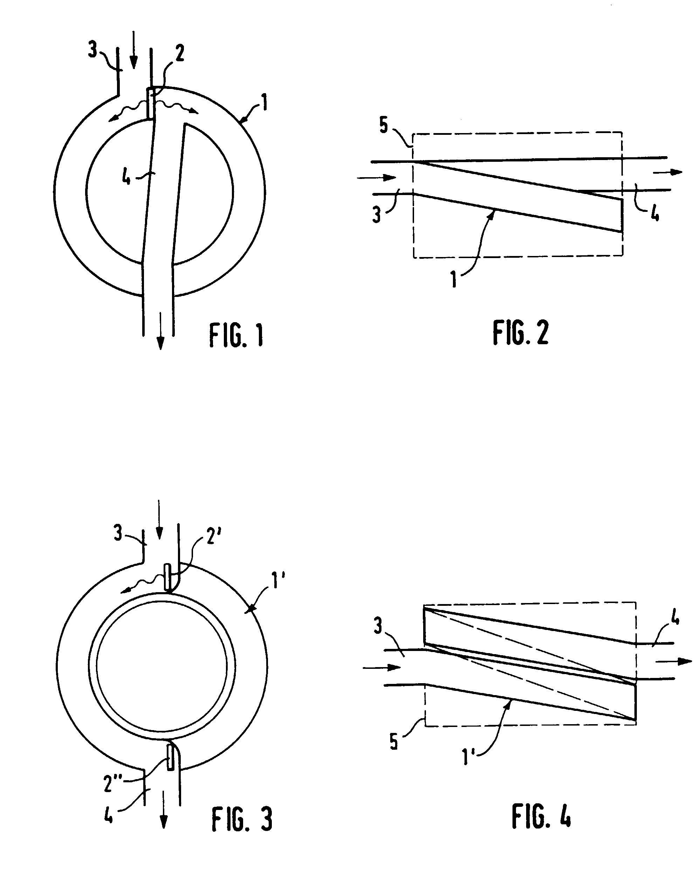

Bei dem in den Figuren 1 und 2 dargestellten Doppelwandler mit einer aktiven Strecke L = π ^{.} D, wobei D der mittlere Durchmesser des Torus ist, entspricht dem eingangs angesprochenen Beispiel mit n = 2. Der Meßkanal bildet dabei einen im Querschnitt kreisförmigen Torus 1, der durch einen Ultraschallwandler 2 eine Querabschottung erfährt, wobei der Eingangskanal 3 zum Zuführen des fluiden Mediums auf der einen Seite und der Ausgangskanal 4- auf der anderen Seite des unterteilenden Ultraschallwandlers 2 quer vom Torus abgeht. Der Torus - der selbstverständlich auch einen anderen als einen kreisrunden Querschnitt haben könnte - ist dabei, wie man insbesondere in Fig. 2 erkennen kann, schräggestellt, so daß der Eingangskanal 3 und der Ausgangskanal 4 fluchtend in einer Ebene zueinander verlaufen können. Dies vereinfacht die Ausbildung der äußeren Anschlüsse der in Fig. 2 strichliert angedeuteten Meßdose 5, in der in üblicher Weise natürlich Platz für die Auswerteelektronik sowie ein Meß- und Zählwerk vorhanden sein muß. Man erkennt dabei aber aus der Fig. 2 sehr einfach, daß in einer Meßdose mit einem Durchmesser D wenn man den halben Innendurchmesser des Meßkanals als vernachlässigbare Größe betrachtet, was ohne weiteres statthaft ist, da dieser Meßkanal ja nicht allzu dick ausgebildet sein sollte, um Mehrfachreflexionen auszuschließen und infolge einer niedrigen Frequenz des Ultraschallwandlers nur die Fortpflanzung einer einzigen longitudinalen Welle mit einem Quermode ohne mehrere Maxima und Minima zuzulassen - die aktive Meßstrecke um den Faktor π, also um mehr als das Dreifache größer ist als der Durchmesser der Meßdose 5. Bei rundem Durchmesser muß dazu die Frequenz f < 1.84 ^{.} C/R sein, wobei R der Rohrradius und C die Schallgeschwindigkeit sind. Durch eine solche Bemessung - bei anderen Querschnittsformen des Meßkanalquerschnitts als dem vorstehend angesprochenen runden Querschnitt ergeben sich andere Grenzfrequenzen, unterhalb deren die angesprochenen longitudinalen Wellen mit einer Quermodeausbildung alleine fortpflanzungsfähig sind - ist unterhalb der Grenzfrequenz die Druckverteilung über den Querschnitt nur gleichförmig in dem Sinn, daß nicht Maxima und Minima verteilt auftreten, sondern quasi die Schallwelle über den Querschnitt "gleichmäßig atmet".

Wird der Ultraschallwandler 2 als Sender impulsförmig angeregt, so sendet er simultan eine Druckwelle in beide Richtungen. Zirkuliert nun als Beispiel für ein fluides (gasförmiges oder flüssiges) Medium Wasser in dem kreisförmigen Ultraschallkanal, so werden die beiden links- bzw. rechtszirkularen Schallimpulse zu unterschiedlichen Zeiten ihre Kreisbahn durchlaufen haben und nicht gleichzeitig am nun als Empfänger dienenden Ultraschallwandler eintreffen. Der Zeitversatz zwischen den beiden Empfängersignalen ist damit ein Maß für die Wassergeschwindigkeit und damit den Durchfluß. Vorteile sind hierbei die Vereinfachung durch nur einen einzigen Ultraschallwandler, die Gleichzeitigkeit der Messung in beiden Richtungen, die Fehler durch Temperaturdriften ausschließt, sowie die Elimination von Problemen, die sich durch die sonst wegen des Rückstoßes stets auftretende Ultraschallwelle im Gehäuse ergeben.

Bei dem Ausführungsbeispiel nach Fig. 3 handelt es sich um den Meßkanal eines Ultraschall-Durchflußmessers, bei dem der Meßkanal 1' aus 1 1/2 Windungen einer zylindrischen Wendel besteht. Der eine Ultraschallwandler 2' ist im Einmündungsbereich des Eingangskanals 3 und der andere 2'' im einmündungsbereich des Ausgangskanals 4 angeordnet, so daß sich, wie auch bei der Ausführungsform nach den Figuren 1 und 2 die Ultraschallwandler an einer Stelle befinden, an der sie vom Flüssigkeitsstrom stets gut gespült werden, so daß Ablagerungen auf ihnen vermieden werden.

Der Durchmesser des Torus 1 bzw. der Wendel 1' sollte bevorzugt entsprechend den Abmessungen konventioneller (Flügelrad-) Zähler gewählt werden, so daß die erfindungsgemäße Ausgestaltung unter Verwendung dieser üblichen Zähler bzw. zum Einbau in diese üblichen Zähler geeignet ist.

## Patentansprüche

1. Ultraschall-Durchflußmesser für fluide Medien mit einer Ultraschallmeßstrecke in einem vom fluiden Medium durchströmten Meßkanal und als Sender und/oder Empfänger fungierenden Ultraschallwandlern, sowie einer Auswerteelektronik zur Ermittlung des Durchflusses des fluiden Mediums aufgrund der Laufzeit oder Phasendifferenz eines Ultraschallsignals, wobei der Meßkanal schnecken- oder wendelförmig aufgewickelt ist, dadurch gekennzeichnet, daß die Frequenz der Ultraschallwandler (2, 2', 2") derart abgestimmt auf den engen Meßkanal gewählt ist, daß dieser wie ein Wellenleiter nur die Fortpflanzung einer longitudinalen Welle mit einer einzigen Quermode über den Querschnitt zuläßt.

2. Ultraschall-Durchflußmesser nach Anspruch 1, dadurch gekennzeichnet, daß bei einem Meßkanal mit kreisrundem Querschnitt mit einem Radius R die Frequenz f < 1.84 · C/R gewählt ist, wobei C die Schallgeschwindigkeit ist.

## Claims

1. Ultrasound flowmeter for fluid media, having an ultrasound measuring section in a measuring channel through which the fluid medium flows, and ultrasound transducers functioning as transmitters and/or receivers, and also an evaluating electronic system for determining the flow of the fluid medium on the basis of the running time or phase difference of an ultrasound signal, the measuring channel being coiled in the form of a spiral or helix, characterized in that the frequency of the ultrasound transducers (2, 2', 2") is selected so as to be tuned to the narrow measuring channel in such a way that the latter, like a waveguide, permits only the propagation of a longitudinal wave with a single transverse mode over the cross-section.

2. Ultrasound flowmeter according to claim 1, characterized in that, in the case of a measuring channel having a circular cross-section with a radius R, the frequency f < 1.84 · C/R is selected, where C is the speed of sound.

## Revendications

1. Débitmètre à ultrasons pour des fluides, comportant une section de mesure d'ultrasons dans un canal de mesure parcouru par le fluide et des convertisseurs d'ultrasons faisant fonction d'émetteurs et/ou de récepteurs, ainsi qu'un circuit électronique d'exploitation destiné à déterminer le débit du fluide sur la base de la durée de propagation ou du déphasage d'un signal ultrasonore, le canal de mesure étant enroulé sous la forme d'une hélice ou d'une spirale, caractérisé en ce que la fréquence des convertisseurs d'ultrasons (2, 2', 2") est choisie, en accord avec le canal de mesure étroit, d'une façon telle que celui-ci, comme un guide d'ondes, n'autorise que la propagation d'une onde longitudinale avec un seul mode transversal sur la section transversale.

2. Débitmètre à ultrasons, selon la revendication 1, caractérisé en ce que, pour un canal de mesure de section transversale circulaire ayant un rayon R, la fréquence f est choisie <1,84.C/R, C étant la vitesse du son.
